# EUROPEAN PATENT SPECIFICATION

(11) **EP 2 999 325 B1**
(45) Date of publication and mention of the grant of the patent: **20.12.2017**
(21) Application number: 14719258.7
(22) Date of filing: 16.04.2014
(51) Int. Cl.: A01D 43/06, A01D 75/30

(54) **APPARATUS FOR TREATING A CROP**
VORRICHTUNG ZUR AUFBEREITUNG VON ERNTEGUT
APPAREIL POUR TRAITER UNE CULTURE

(30) Priority: 23.05.2013 SE 1300376
(43) Date of publication of application: 30.03.2016
(73) Proprietor: Imsson Natur Teknik AB, 449 90 Nol (SE)
(72) Inventor: KARLSSON, Inge, S-449 90 Nol (SE)
(74) Representative: Valea AB
(86) International application number: PCT/EP2014/057708
(87) International publication number: WO 2014/187618

(56) References cited:
- EP-A1- 1 554 919
- EP-A2- 1 779 716
- WO-A1-2010/038208
- DE-C1- 19 931 684
- US-A- 1 895 432

## Description

### TECHNICAL FIELD

The present disclosure relates to an apparatus for treating a crop. The disclosure further relates to an arrangement comprising the apparatus and a use of the apparatus or the arrangement.

### BACKGROUND

Modern agriculture is highly mechanized and most field operations are performed by machines, either self-propelled or driven by e.g. a tractor. Usually a field is run over a couple of times during a growing season, usually by different machines. The machines run back and forth over the field in order to cover most of the area, or preferably substantially the whole area, of the field.

However, when running over a field with a machine and/or a tractor, there is a risk of creating compaction damages to the ground. Thereby, the capillary structure of the affected ground is influenced in a negative way. Plants growing on top of the compacted ground grow less and/or slower than plants on the adjacent uncompacted ground, due to impaired access to nourishment and/or oxygen. The capacity of holding and transporting water is impaired in the compacted ground. It is known that leguminous plants, i.e. plants belonging to the Fabaceae or Leguminosae family, commonly known as the legume, pea, or bean family, may suffer badly from compacted ground. However, also other crops, such as grass, are affected negatively. In addition the plants may be mechanically damaged when being run over by a machine or a tractor. The more times the field is run over, the higher is the risk of damages. Since most machines have different widths, the ground will be compacted at different locations and plants damaged for each run, such that eventually a large total area is affected.

The compacted ground results in a higher environmental load. When the natural nitrogen production performed by e.g. leguminous plants is decreased, artificial nitrogen may be spread instead. There is a higher risk of leaching or soaking from the ground due to the damaged structure of the ground. The machines consume a lot of energy. There are further many transports of machines on roads in order to move the machines from one field to another.

With known machines and methods there is a high risk of getting contaminations, such as rests of fertilizer, soil and/or stones, into the feedstuff intended for the animals. Such contamination may lead to losses during ensilage.

The machines according to known technology are often technically complicated, energy-consuming, heavy and/or expensive. They need a lot of maintenance.

There is for many different reasons a desire to improve known machines.

### SUMMARY

The object of the present disclosure is to overcome or ameliorate at least one of the disadvantages of the prior art, or to provide a useful alternative.

It is desirable to provide an apparatus resulting in less compaction of the ground than machines of known technology.

It is further desirable to provide an apparatus, which, when used for treating a crop, is able to improve the quality of the feedstuff produced from the crop.

The object above may be achieved by the subject-matter of claim 1.

Thus, in a first aspect of the present invention there is provided an apparatus for treating a crop. The apparatus has a longitudinal and a transverse direction. It comprises
- a cutting device, adapted to cut the crop,
- a pick-up device, adapted to pick-up the crop and to move it substantially rearwards in the longitudinal direction.
The cutting device is displaceable between a cutting position and a non-cutting position and the pick-up device is adapted to pick up the crop either from the cutting device or from ground.

The longitudinal direction is substantially in the running direction of the apparatus. The transverse direction is perpendicular to the longitudinal direction and substantially parallel to a main plane of the ground.

EP 1 554 919 A1 relates to coupling of a lateral mowing unit and its complementary means to a supporting structure for attachment to a tractor or a carrier vehicle.

WO 2010/038208 A1 relates to an apparatus for shredding a material, in particular plant material, especially grassy material. The apparatus comprises a frame that defines a compartment for housing a shredding rotor mounted with its axis of rotation substantially transversal, and has at least one opening for the passage of the material and extending longitudinally of the apparatus. Means, located at the respective longitudinal opening, are provided for intercepting the material and being in the form of respective intercepting means that are compliant in a direction substantially perpendicular to the ground.

EP 1 779 716 A2 relates to a mowing machine having transverse conveying device whose retaining area is provided partially transverse to the driving direction and is arranged sidewise close to the mowing area of the mower. The transverse conveying device has a retaining area for retaining of cut items.

DE 199 31 684 C1 relates to an agricultural harvester having a combined straw chopping and spreading system with a structured mantle body round the lateral conveyor screw to eject the straw in a swathe with acceleration for spreading over the ground.

US 1 895 432 A relates to an agricultural implement adapted to be mounted in front of a tractor. The implement tools may be swung to an inoperative position.

In the cutting position the cutting device has a height from the ground, which is suitable for cutting a crop. The height from the ground, and thus the cutting height, may be adjustable, e.g. by adjusting the distance between the apparatus and the ground, i.e. the cutting device is moved relative to the ground together with the rest of the apparatus. As a contrast, when the cutting device is displaced form the cutting position to the non-cutting position, the cutting device is displaced in relation to the rest of the apparatus. In particular, the cutting device is vertically displaced in relation to the pick-up device. For example, the non-cutting position of the cutting device may be located above the centre line of the pick-up device. The cutting device may be rotated between the two positions and/or translated between the two positions. A protective cover may be adapted to protect the cutting device when in the non-cutting position.

The cutting device may also have at least one intermediate position, e.g. a high-cutting position, which may be passed during the displacement between the cutting and the non-cutting position.

The apparatus according to the invention is versatile and may be used for many different field operations such as cutting a crop, laying the cut crop in spread distribution, turning of the crop when lying on the ground, string-laying of the crop and/or aerating of a string. The operations may be performed one after each other or in combinations. Purely as an example cutting may be combined with either laying the crop in spread distribution or in a string. Due to the versatility, one and the same apparatus can be used for different field operations.

The apparatus may be adapted for controlled traffic farming, CTF, i.e. it is possible to select location of the wheel tracks in a controlled way, e.g. by means of GPS. For example, it is possible to run in the same wheel tracks every time the field is run over, since the apparatus has a certain width, which is the same when performing the different operations. Thereby the above-mentioned problem of ground compaction is limited to those wheel tracks, leaving the rest of the field unaffected. Further, by always using the same width, mechanical damages to the plants are minimized. The amount of crop for a field will be larger as compared to using known machines. Since less ground is compacted, there will be a decreased need for ground treatment in order to counteract the compaction. As another example, it is instead possible to always select a new wheel track each time the field is run over, such that the wheels tracks may be evenly distributed over the field.

The term crop as used herein may be used to denote the crop when still being a plant, which is going to be cut, or after it has been cut, e.g. while being transported through the apparatus or while lying on the ground. Examples of suitable crops to be handled by the apparatus according to the invention are leguminous plants, grass, wheat, rye, barley, oats. The apparatus is primarily not intended for maize.

The pick-up device is adapted to pick up the crop either from the cutting device, if cutting the crop at the same time, or from ground, if picking up already cut crop. The pick-up device is further adapted to move the picked-up crop substantially rearwards in the longitudinal direction, i.e. further into the apparatus.

The quality of feedstuff made of the crop is improved as compared to when utilizing an apparatus according to known technology. There will be less contamination in the feedstuff produced from the crop. Further, it is possible to shorten the time between when the crop is cut and when it is packed as feedstuff. This results in less loss during ensilage, a higher content of nourishment in the feedstuff and eventually better health for the animals eating the feedstuff

The nitrogen produced by the plans, such as leguminous plants, may be better taken care of, due to less ground compaction. There is less leaching or soaking from the ground as compared to known technology. The apparatus according to the invention results in a machine which is less heavy and smaller as compared to known technology. Less energy is thus needed to run it. There will also be fewer transports made on roads, since more than one operation may be made at the same time.

The apparatus may further comprise - a transport device, adapted to move the crop in the transverse direction. In that case the pick-up device is adapted to hand the crop over to the transport device. Preferably the crop is handed over directly to the transport device, without any intermediate transport element in between.

In a preferred embodiment, the pick-up device and the transport device are two separate devices. The pick-up device is adapted to pick up the crop from the ground and to move it substantially rearwards in the apparatus. The transport device is adapted to move the crop at least in a transverse direction. The transport device may move the crop both in the transverse and the longitudinal direction, e.g. along a helical path.

The transport device may comprise a transport screw adapted to move the crop in a helical manner, the transport screw having a length axis being in the transverse direction of the apparatus. In an embodiment, the transport device is located longitudinally behind the rotor of the pick-up device, preferably having the same width.

The apparatus may further comprise
- a rear guide, having at least a raised and a lowered position,
at least a portion of the rear guide being located above and/or longitudinally behind the transport device.

The rear guide is adapted to guide the crop, when being transported by the transport device and/or when leaving the transport device. The rear guide may be displaced between its raised and lowered position by rotating around a pivot axis at or adjacent to its upper edge, the upper edge being the edge farthest from the ground. In the lowered position the rear guide will help to keep the crop at the surface of the transport device. In the raised position the rear guide will help to distribute the crop over the ground, preferably in an even manner. The shape of the rear guide is thus preferably adapted to provide a smooth path for the crop, when in the raised position. The rear guide may have a curved shape. The curvature of the rear guide is then preferably adapted to that of the transport device, such that it follows the circumference of the transport device in the lowered position.

The apparatus may further comprise
- a front cover, having at least a raised and a lowered position, and being located longitudinally in front of the pick-up device.

The position of the front cover may thus be adapted to if standing crop is to be cut, or if crop is to be picked up from the ground. The front cover may be displaced between its raised and lowered position by rotating around a pivot axis at or adjacent to its upper edge, the upper edge being the edge farthest from the ground.

The pick-up device and the transport device may be comprised in one unit, such that the crop is handed over directly from the pick-up device to the transport device, i.e. without passing any intermediate device, such as e.g. a belt. In particular, it is preferred that the pick-up device and the transport device are arranged in a common housing. In that case, the front cover and/or the rear guide preferably form portions of that housing.

The cutting device may comprise a reciprocating mover. However, it is also feasible to use other kinds of cutting devices, such as e.g. rotary discs. Both reciprocating movers and rotary discs are well known to the skilled person and will not be further explained in this description. In general, a reciprocating mover weighs less than a rotary disc for cutting the same width of the crop. Further, the reciprocating mover needs comparably less energy than the rotary disc to cut the same amount of crop. In addition, the rotary disc beats the crop such that it breaks, which may cause rot in the part of the plant remaining in the field. The reciprocating mover instead cuts the crop. On the other hand, a rotary disc in general has a higher cutting speed than a reciprocating mover, offering a possibility for the apparatus to move more quickly forwards.

The apparatus may further comprise
- a housing, enclosing at least the pick-up device, and
- at least one elongate arm, preferably at least one elongate arm at each lateral side of the housing,
wherein the cutting device is pivotably connected to the housing by means of the at least one elongate arm. The elongate arm may at a first end portion be pivotably connected to the cutting device at a first rotation axis and at a second end portion pivotably connected to the housing at a second rotation axis, such that the cutting device is displaceable between the cutting position and the non-cutting position by means of rotation around the rotation axes at the first and second end portions of the elongate arm.

The housing, whereto the at least one elongated arm is attached, may house the pick-up device and the transport device in a common housing. In that case, the front cover and/or the rear guide preferably form portions of that housing.

The term "at an end portion of an object" as used herein means a location in the vicinity of the geometrical end point of that object, the object usually being elongated such as an arm. The location is closer to the geometrical end point than the centre of the object. If the object is elongated, the end portion may be the most distant quarter of the object. In most practical cases for apparatuses according to the invention, the location of the end portion is within a few centimetres from the geometrical end point.

The use of the above at least one elongate arm makes the cutting device easily displaceable between its cutting position and non-cutting position.

The pick-up device may comprise a rotor provided with a plurality of pick-up elements such as fingers, the pick-up elements being arranged to pick-up the crop and the rotor having a length axis being in the transverse direction of the apparatus.

The pick-up elements are adapted to be able to pick up crop lying on the ground or to pick up the crop from the cutting device. The distance between the ground and the pick-up elements may be adjusted by adjusting the distance between the apparatus and the ground.

In an embodiment, the pick-up element comprises a resilient portion, which is attached to the rotor, and an elongated portion, which is utilized to pick up crop. The finger extends in a direction which is substantially perpendicular to a radius of the rotor. The resilient portion may be helically wound, such that the whole finger can be formed as one unit. There may further be a protection plate, which is adapted to prevent a non-desired object from getting stuck in the space between resilient portion and the rotor.

The apparatus may further comprise a wheel arrangement comprising a pair of wheels with a common attachment for pivotal attachment to a carrying beam of the apparatus. The rotation axes of the wheels are parallel to each other and vertically displaceable in relation to each other.

This wheel arrangement is advantageous when the wheels run over uneven ground since the wheel arrangement evens out vertical differences of the ground. The apparatus may comprise one, two, three, four or more wheel arrangements. A wheel arrangement, as described herein for the apparatus, is also suitable for other kinds of apparatuses, arrangements, machines or vehicles intended to be used in fields or in terrain.

The rotation axes of the wheels may extend in a substantially transverse direction, such that the wheels will move the apparatus in the longitudinal direction, i.e. in the running direction. Further, the wheels of the wheel arrangement may be at different vertical levels. In that case their rotation axes are anyway parallel, e.g. running in the transverse direction of the apparatus, but at different vertical heights.

By using a common attachment for a pair of wheel, any unevenness of the ground is only partly transferred, as compared to if each wheel had its own attachment, wherein the unevenness of the ground would be fully taken up by the individual attachment of that wheel.

The position of the common attachment relative to the carrying beam is preferably adjustable, e.g. by mechanical means or by hydraulic means, not illustrated. By adjusting this relative position, the height of the apparatus above the ground may be adjusted, and thereby the cutting height and the distance between the fingers and the ground may be adjusted.

In an embodiment the wheel arrangement comprises
- a portion of a transverse axle,
- a first arm, extending in the longitudinal direction of the apparatus, the first arm being pivotally connected to the portion a of the transverse axle at a first end portion of the first arm,
- a second arm, extending in the longitudinal direction of the apparatus, the second arm being pivotally connected to the portion of the transverse axle at a first end portion of the second arm, and
- a third arm, at a first end portion being pivotally connected to a second end portion of the first arm, and at a second end portion being pivotally connected to a second end portion of the second arm.
The portion of the transverse axle, the first arm, the second arm and the third arm form a frame. A first wheel of the pair of wheels is rotatably connected to the first arm at a first attachment. A second wheel of the pair of wheels is rotatably connected to the second arm at a second attachment. The third arm is pivotally attachable to the carrying beam at a third attachment.

Due to the pivotal connection of the first arm and the second arm to the transverse axle, the first arm and the second arm can form an angle to the ground, the size of the angle depending on the vertical position of the ground below that wheel.

The frame formed by the transverse axle, the first arm, the second arm and the third arm stabilizes the wheel arrangement.

As an alternative, or a complement, to the wheel arrangement described herein, the apparatus may further comprise a skid shoe arrangement, which comprises a pair of skid shoes and an arm. The, the skid shoes are pivotally attached to the arm, such that the skid shoes are vertically displaceable in relation to each other by tilting the arm around a pivot axis.

This skid shoe arrangement is advantageous when running over uneven ground since the skid shoe arrangement evens out vertical differences of the ground. The apparatus may comprise one, two, three, four or more skid shoe arrangements. A skid shoe arrangement, as described herein for the apparatus, is also suitable for other kinds of apparatuses, arrangements, machines or vehicles intended to be used in fields or in terrain.

The skid shoe arrangement may further comprise a carrying structure. The arm is pivotally attached to the carrying structure at the pivot axis to allow the tilting and the carrying structure is attached to a carrying beam of the apparatus. Preferably the carrying structure is attached to the carrying beam in a way allowing height adjustment. As an example the carrying structure may comprise a plurality holes, and one of the holes may be selected to obtain the desired height over ground.

In an apparatus according to the invention, which comprises a front cover as described above and a rear guide as described above, the apparatus is adjustable for cutting the crop by
- setting the cutting device in its cutting position,
- setting the front cover in its raised position,
- setting the rear guide in its raised position, if the crop is to be laid in a spread distribution, or, as an alternative, setting the rear guide in its lowered position, if the crop is to be laid in a string.

By spread distribution is meant that the cut crop is distributed over the width of the apparatus in the transverse direction, preferably distributed over the whole width of the apparatus, most preferably substantially evenly distributed over the whole width of the apparatus. If laying the crop in a spread distribution only a low effect is utilized for performing the operation. In addition, the spread distribution improves the drying of the crop.

As an alternative to being laid in a spread distribution, the crop may be laid in a string. The cut crop will then be arranged in strings in the field. Preferably the strings are substantially parallel to each other.

In an apparatus according to the invention, which comprises a front cover as described above and a rear guide as described above, the apparatus is adjustable for turning of the crop by
- setting the cutting device in its non-cutting position,
- setting the front cover in its lowered position,
- setting the rear guide in its raised position.

The turning improves the drying of the crop.

In an apparatus according to the invention, which comprises a front cover as described above and a rear guide as described above, the apparatus is adjustable for string-laying of the crop by
- setting the cutting device in its non-cutting position,
- setting the front cover in its lowered position,
- setting the rear guide in its lowered position.

The string-laying makes the crop easier to collect.

In an apparatus according to the invention, which comprises a front cover as described above and a rear guide as described above, the apparatus is adjustable for aerating of a string of the crop by
- setting the cutting device in its non-cutting position,
- setting the front cover in its lowered position,
- setting the rear guide in its lowered position or its raised position.

The aerating improves the drying of the crop.

The apparatus is adapted to be set in the different settings described herein.

Due to the versatility of the apparatus, one and the same apparatus can be used for many different field operations. Further, since the same apparatus is used, it will automatically have the same width w. The apparatus makes it possible to use controlled traffic farming, CTF, as described above.

In a second aspect of the present invention, there is provided an arrangement comprising,
- a first apparatus as described above being used as a left-hand outer section of the arrangement,
- a second apparatus as described above being used as a right-hand outer section of the arrangement,
- a third apparatus as described above being used as a centre section of the arrangement.
The arrangement is adapted such that the centre section may be arranged between the left-hand and right-hand outer sections or may be used separate from the left-hand and right-hand outer sections.

The arrangement may be connected to the tractor in different ways. In an embodiment, the left-hand outer section and the right-hand outer section comprise a cutting device, a pick-up device and a transport device, while the centre section comprises a cutting device and a pick-up device, i.e. no transport device. The two transport devices are arranged such that they transport the crop towards the centre, e.g. by two mirror-imaged transport screws. The three sections may all be connected in front of the tractor moving forwards. The three sections may all be connected behind the tractor moving backwards, i.e. opposite to the normal running direction of the tractor. The three sections may all be connected behind the tractor moving forwards. The centre section may be connected in front of the tractor and the left-hand outer section and the right-hand outer section behind the tractor, which moves forwards.

The arrangement may also have other configurations, e.g.
- a first apparatus used as a left-hand outer section and a second apparatus used as a right-hand outer section, without any centre section, or
- three apparatuses all comprising a cutting device, a pick-up device and a transport device, i.e. also the centre section comprises a transport device, or
- two or more apparatuses according to the invention at either side of a centre section, i.e. in total five or more apparatuses.

In a third aspect of the present invention, there is provided a use of the apparatus, as described above, or the arrangement, as described above, for operations of cutting a crop, turning a crop, string-laying a crop and/or aerating of a string of a crop, wherein the apparatus or arrangement is adapted to perform at least two, preferably at least three, most preferably all four of these operations.

In an embodiment of the use, an operation width of the apparatus or arrangement is the same for at least two, preferably at least three and most preferably all four of these operations. This results in the above-mentioned advantage of being able to use controlled traffic farming, CTF.

In a fourth aspect of the present invention, there is provided a method of treating a crop utilizing an apparatus as described herein or an arrangement according as described herein, wherein the apparatus comprises a front cover and a rear guide. The method comprises
- setting the cutting device in its cutting position or its non-cutting position,
- setting the front cover in its lowered position or in its raised position,
- setting the rear guide in its lowered position or in its raised position.

In a fifth aspect of the present invention, there is provided a method of cutting a crop with the above apparatus, the method comprising
- having the cutting device in its cutting position,
- having the front cover in its raised position,
- having the rear guide in its raised position, if the crop is to be laid in a spread distribution, or, as an alternative, having the rear guide in its lowered position, if the crop is to be laid in a string.

In a sixth aspect of the present invention, there is provided a method of turning of the crop with the above apparatus, the method comprising
- having the cutting device in its non-cutting position,
- having the front cover in its lowered position,
- having the rear guide in its raised position.

In a seventh aspect of the present invention, there is provided a method of string-laying of the crop with the above apparatus, the method comprising
- having the cutting device in its non-cutting position,
- having the front cover in its lowered position,
- having the rear guide in its lowered position.

In a eighth aspect of the present invention, there is provided a method of aerating a string of the crop with the above apparatus, the method comprising
- having the cutting device in its non-cutting position,
- having the front cover in its lowered position,
- having the rear guide in its lowered position or its raised position.

### BRIEF DESCRIPTION OF THE DRAWINGS

The present invention will hereinafter be further explained by means of non-limiting examples with reference to the appended drawings wherein:
- Fig. 1a: is a schematic perspective view of an arrangement according to invention comprising three apparatuses according to the invention,
- Fig. 1b: is a top view of the arrangement according to Fig. 1a,
- Fig. 2a: is a cross-sectional view of an apparatus according to the invention,
- Fig. 2b: is a detailed view of a pick-up element,
- Fig. 3: is a top view of the apparatus according to Fig. 2a,
- Fig. 4: is a view from behind of the apparatus according to Fig. 2a,
- Fig. 5a: is a schematic perspective view of a wheel arrangement,
- Fig. 5b: illustrates rotation axes of the wheel arrangement according to Fig. 5a,
- Fig. 6: is a view from behind of the wheel arrangement according to Fig. 5a,
- Fig. 7: is a cross-sectional view of an arrangement according to the invention,
- Fig. 8: is a cross-sectional view of an alternative arrangement according to the invention,
- Fig. 9: is a schematic perspective view from below of a skid shoe arrangement,
- Fig. 10: is a view from behind of the skid shoe arrangement according to Fig. 9,
- Fig. 11: is a side view of the skid shoe arrangement according to Fig. 9, also illustrating cutting height adjustment, and
- Fig. 12: illustrates different ways of connecting the arrangement to a tractor.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

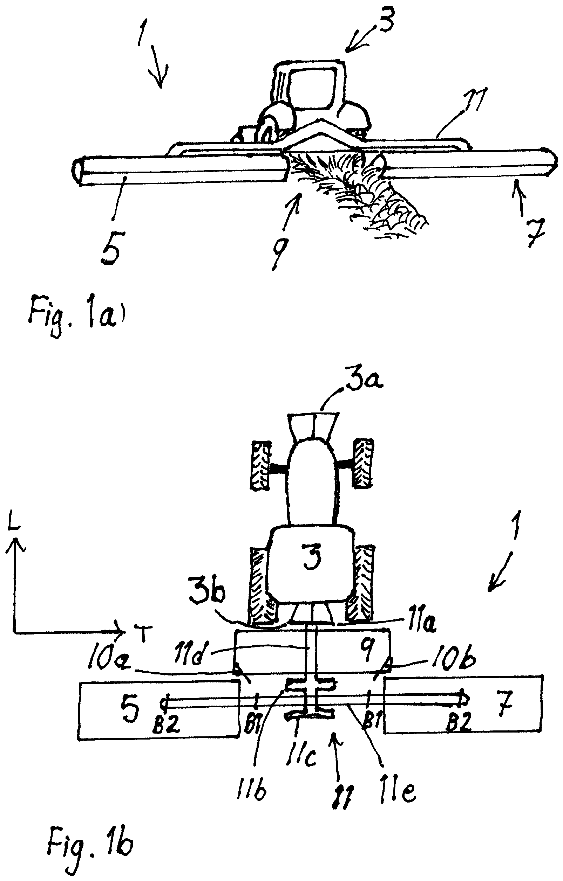

Figures 1a and b schematically illustrate an arrangement 1 according to invention being pulled by a tractor 3. The arrangement 1 has a longitudinal direction L and a transverse direction T. The longitudinal direction L is substantially in the running direction of the tractor 3. The transverse direction T is perpendicular to the longitudinal direction L and substantially parallel to the ground.

The tractor 3 comprises a front adapter 3a and a back adapter 3b, which are used for attaching various machines, such as the arrangement 1, to the tractor 3. The arrangement 1 comprises apparatuses 5, 7, 9 forming a left-hand outer section 5, a right-hand outer section 7 and a centre section 9. The apparatuses 5, 7, 9 are connected to the tractor 3 by means of a frame 11.There may further be a guide 10a, 10b located between the centre section 9 and one of the outer sections 5, 7, which guide 10a, 10b may move the crop a short distance in the transverse direction T, if it is desired to lay the crop in a string. Preferably, there is one such guide 10a, 10b at either side of the centre section 9.

The arrangement 1 has an elongated shape, i.e. it is much larger in the transverse direction T than in the longitudinal direction L. The configuration of the arrangement 1 makes it possible to keep the weight of the arrangement 1 low, such that compaction of the ground due to weight of the arrangement 1 is reduced, and preferably avoided.

The frame 11 comprises a first A-frame 11a adapted for attachment to the back adapter 3b of the tractor 3. The frame 11b further comprises a second A-frame 11b and a third A-frame 11c. The frame 11 can be divided at the second A-frame 11b, e.g. if only the centre section 9 is to be used. The third A-frame 11c is used if the arrangement 1 is attached in front of the tractor 3. The frame 11 further comprises a carrier frame 11d connecting the A-frames 11a, 11b, 11c. A transverse frame 11e is used for connection of the left-hand outer section 5 and the right-hand outer section 7.

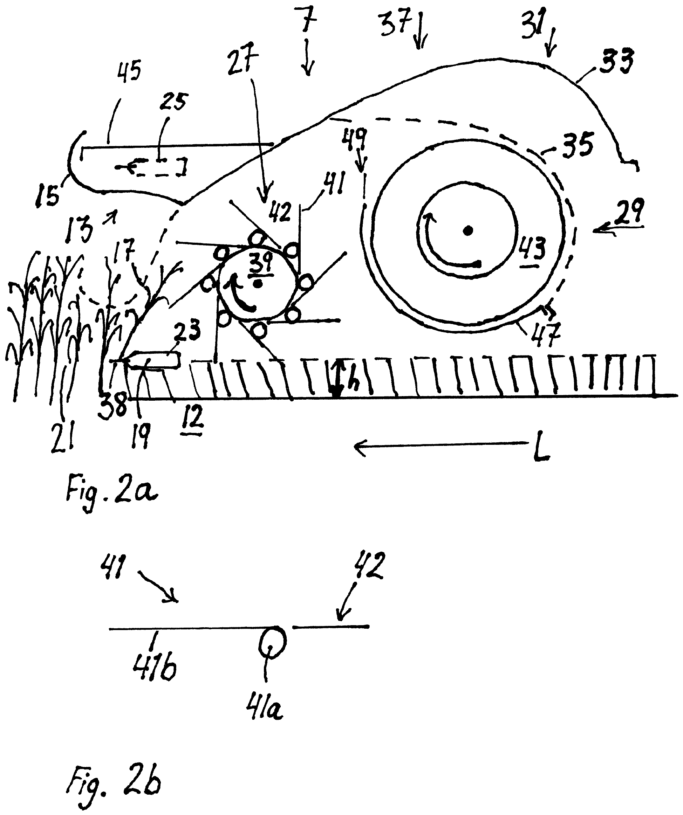

Figures 2a, 3 and 4 show one of the apparatuses, the right-hand outer section 7 in a cross-sectional view, a top view and from behind. The right-hand outer section 7 has a longitudinal direction L and a transverse direction T coinciding with those of the arrangement 1.

The apparatus 7 comprises
- a front cover 13, having at least a raised position 15, illustrated as a solid line, and a lowered position 17, illustrated as a dashed line,
- a cutting device 19, adapted to cut a crop 21, having a cutting position 23, illustrated as a solid line, and a non-cutting position 25, illustrated as a dashed line,
- a pick-up device 27, adapted to pick-up the crop,
- a transport device 29, adapted to move the crop in the transverse direction T, and
- a rear guide 31, having at least a raised position 33, illustrated as a solid line, and a lowered position 35, illustrated as a dashed line.

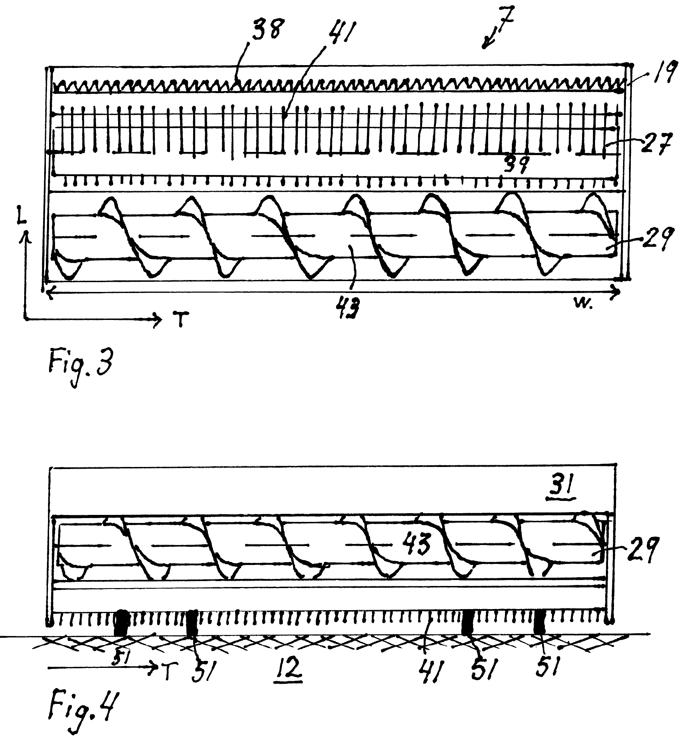

The front cover 13 and the rear guide 31 form part of a housing 37 enclosing the pick-up device 27 and the transport device 29. Cut crop can be handed over directly from the pick-up device 27 to the transport device 29. Figure 3 is shown with the housing removed in order to better illustrate the apparatus 7.

The cutting device 19 of the illustrated embodiment comprises a reciprocating mover 38. However, it is also feasible to use other kinds of cutting devices, such as e.g. rotary discs.

The pick-up device 27 is adapted to pick up crop. It may be crop 21 just having been cut by the cutting device 19, as illustrated, or the pick-up device 27 may be used to pick up crop lying on the ground 12. When picking up crop lying on the ground 12, the cutting device 19 is displaced to its non-cutting position 25, such that it will not damage the crop.

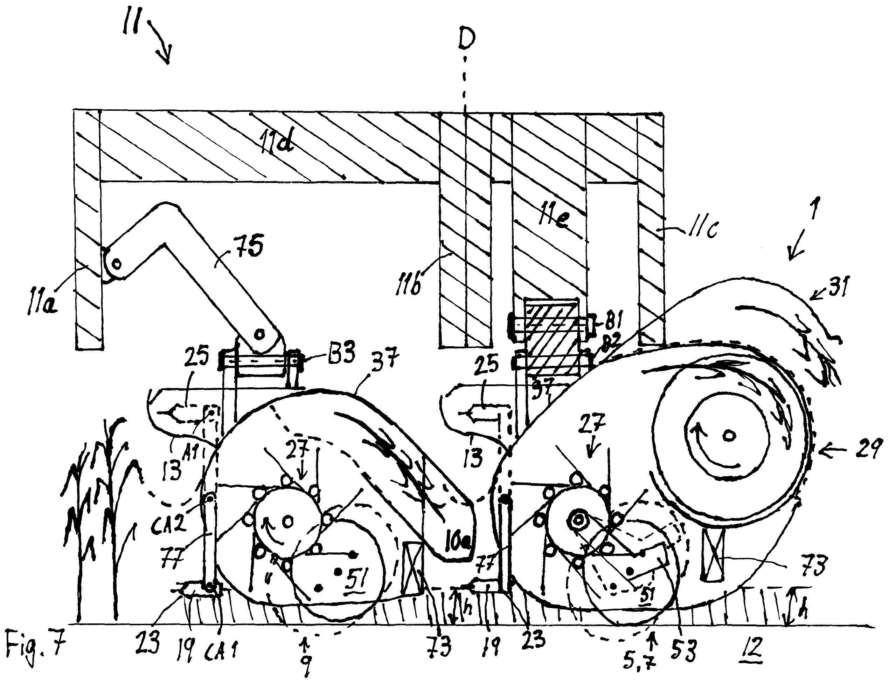

The pick-up device 27 comprises a rotor 39 extending in the transverse direction T, substantially parallel to the ground 12. The rotor 39 is provided with a plurality of pick-up elements, such as fingers 41. The fingers 41 are adapted to be able to pick up crop lying on the ground 12. The distance between the ground 12 and the fingers 41 may be adjusted by adjusting the distance between the apparatus 7 and the ground 12, e.g. as is described below in conjunction with Figure 7.

When the cutting device 19 is in its cutting position 23 it is at substantially the same vertical distance from the ground 12 as the tips of the fingers 41. When the cutting device 19 is moved to its non-cutting position 25, it is moved vertically upwards in relation to the pick-up device 27, in this case to a vertical position being above the rotor 39.

Figure 2b illustrates a detailed view of a pick-up element in the form of a finger 41. The finger 41 comprises a resilient portion 41a, which is attached to the rotor 39, and an elongated portion 41b, which is utilized to pick up crop. The elongated portion 41b extends in a direction which is substantially perpendicular to a radius of the rotor 39. The resilient portion 41a may be helically wound, such that the whole finger 41 can be formed as one unit. There may further be a protection plate 42, which is adapted to prevent a non-desired object from getting stuck in the space between resilient portion 41a and the rotor 39. Such a pick-up element 41 may also be used in other agricultural apparatuses, machines or arrangements.

The pick-up device 27 also moves the crop substantially rearwards in the longitudinal direction L. The crop then passes between the rotor 39 and the housing 37 and is handed over to the transport device 29, which in the illustrated embodiment comprises a transport screw 43 having a length axis extending in the longitudinal direction L of the apparatus 7, substantially parallel to the ground 12. The transport screw 43 moves the crop in a helical manner, thus moving the crop in the transverse direction T. Since the illustrated embodiment shows the right-hand outer section 7, the transport screw 43 moves the crop towards the centre of the arrangement 1, i.e. to the left of Figure 3. In order to move the crop in an efficient way, the rear guide 31 is in its lowered position 35.

If not intending to move the crop in the transverse direction T, the rear guide 31 would instead be in its raised position 33, thereby letting the crop pass above the transport device 29.

Figure 2a further illustrates a protective cover 45, which is adapted to protect the cutting device 19 when in the non-cutting position 25. A transport guide 47 follows the geometry of the transport device 29 for a portion of the circumference. When the rear guide 31 is in its lowered position 35, it substantially extends around the circumference of the transport device 29 such that it meets the transport guide 47. The rear guide 31 and the transport guide 47 thus makes the crop stay at the surface of the transport device 29, such that the crop will not fall off the transport device 29, when being transported in the transverse direction T.

As an option, as illustrated in Figure 2a, there may also be a stone protection guide 49, which may have an adjustable height. The stone protection guide 49 will help to prevent any stone being picked up by the pick-up device 27 from being thrown against the transport device 29, possibly causing damages to the transport device 29. Instead the stone protection guide 49 will make such a stone fall to the ground 12 between the pick-up device 27 and the transport device 29. The right-hand outer section 7 runs over the ground 12 by means of wheels 51, see Figure 4.

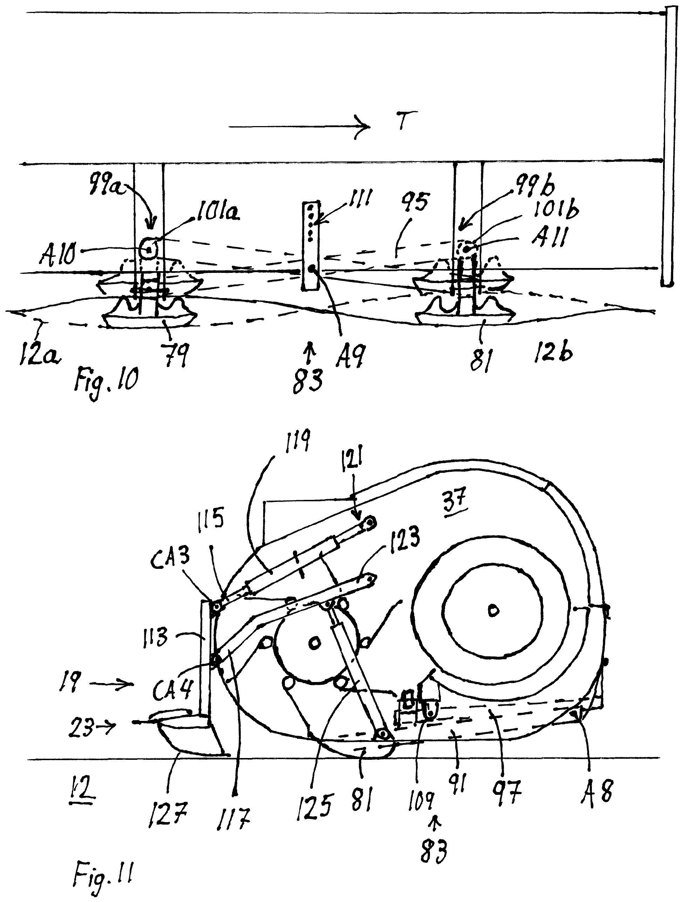

It is possible to select a cutting height h, i.e. the height from the ground 12 at which the crop 21 is cut. The cutting height h may be adjusted by adjusting the distance between the apparatus 7 and the ground 12, e.g. as is described in conjunction with Figure 7 or in the way described in conjunction with Figure 11. Thereby it is possible to only cut the part of the crop, which is desired. Purely as an example, it is possible to select the cutting height h, such that only the ears of the crop 21 are cut, resulting in a feedstuff with high nourishment content.

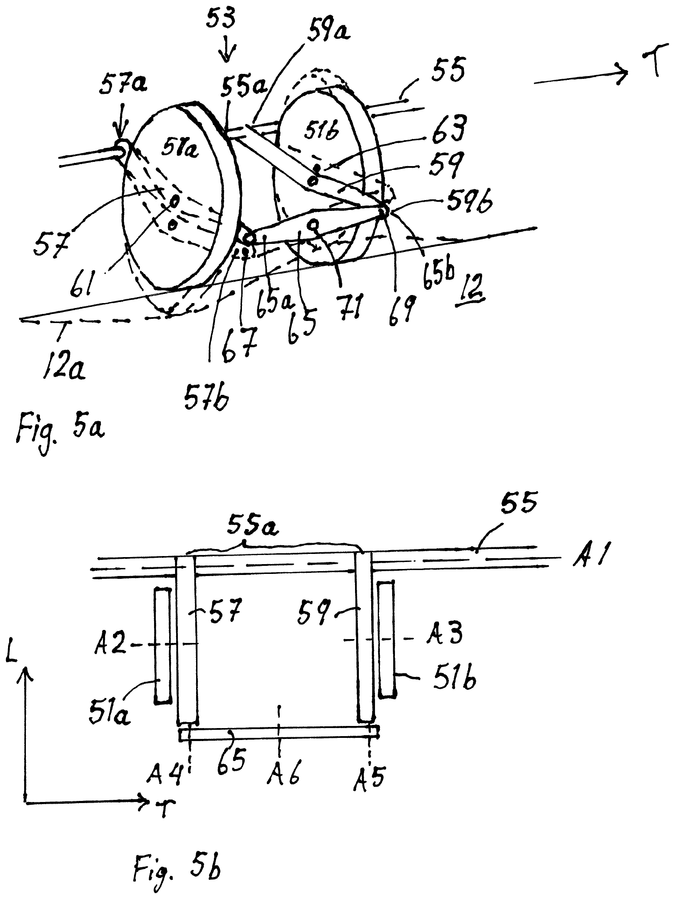

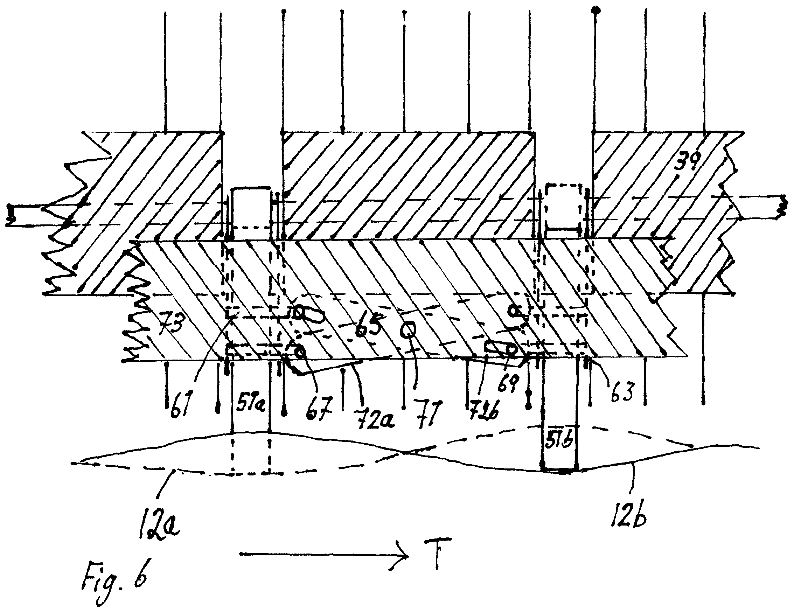

Figures 5a and 6 illustrate a wheel arrangement 53 of the wheels 51 in greater detail, in a perspective view and in a view from behind. Figure 5b illustrates the rotation axes A1-A6 of the wheel arrangement 53.

The wheels 51 are arranged in pairs, such that two wheels 51a, 51b are comprised in the wheel arrangement 53. This wheel arrangement 53 is advantageous when the wheels 51a, 51b run over uneven ground since the wheel arrangement 53 evens out vertical differences of the ground 12. The apparatus 5, 7, 9 may comprise one, two, three, four or more wheel arrangements 53. For example, the apparatus 7 illustrated in Figure 4 comprises two wheel arrangements 53.

The wheel arrangement 53 is pivotally connected to an axle 55, whereof a portion 55a forms part of the wheel arrangement 53. The axle 55 is extending in the transverse direction T parallel to the main plane of the ground 12. The axle 55 is further parallel to the above-mentioned rotor 39 provided with the fingers 41. The axle 55 is able move vertically up and down in relation to the rest of the apparatus 5, 7, 9, when it moves over the ground 12, as is explained below.

The wheel arrangement 53 comprises a first arm 57 and a second arm 59, which are pivotally attached to the axle 55 at their respective first ends 57a, 59a. The axle 55 forms a first rotation axis A1, which extends in the transverse direction T of the apparatus 5, 7, 9. See Figure 5b. In the illustrated embodiment, there is an arm 57, 59 located at the inside of the wheels 51a, 51b. Alternatively, each of the first arm 57 and the second arm 59 may comprise at least one arm at either side of the wheel 51a, 51b. As a further alternative, there may be an arm outside each wheel 51a, 51b.

The wheel 51a is pivotally attached to the first arm 57 at a first attachment 61 with a second rotation axis A2. Similarly, the other wheel 51b is pivotally attached to the second arm 59 at second attachment 63 with a third rotation axis A3. The rotation axes A2, A3 of the respective wheels 51 are parallel to the first rotation axis A1, but at another vertical height position, and are hence also parallel to the rotation axis of the rotor 39.

The wheel arrangement 53 further comprises a third arm 65, which at its respective ends 65a, 65b is pivotally connected to second ends 57b, 59b of the first and second arms 57, 59 at a third attachment 67 and a fourth attachment 69 with a fourth rotation axis A4 and a fifth rotation axis A5. The fourth and fifth rotation axes A4, A5 extend along the first arm 57 and the second arm 59, respectively. The fourth and fifth rotation axes A4, A5 thus extend in the longitudinal direction L of the apparatus 5, 7, 9. However, due to the pivotal attachment of the first arm 57 and the second 59 arm to the axle 55, the fourth and fifth rotation axes A4, A5 can form an angle to the main plane of the ground. Further, due to the pivotal attachment at the third attachment 67 and fourth attachment 69, the fourth and fifth rotation axes A4, A5 need not be parallel to each other. Instead each of them can form an individual angle to the ground 12. Thereby the wheel arrangement 53 is able to even out vertical differences of the ground 12.

The axle portion 55a, the first arm 57, the second arm 59 and the third arm 65 form a closed frame giving stability to the wheel arrangement 53.

The third arm 65 comprises a fifth attachment 71, e.g. a bogie pin, for pivotal attachment to a carrying beam, which extends in the transverse direction T. The fifth attachment 71 has a sixth rotation axis A6, extending in the longitudinal direction L of the apparatus 5, 7, 9. The carrying beam 73 is illustrated in Figure 7.

Due to its construction, the wheel arrangement 53 is able to tilt in the transverse direction T of the apparatus 5, 7, 9, which helps when the arrangement 1 is running over uneven ground 12.

One example of uneven ground 12a is illustrated by a dashed line in Figures 5 and 6. The right-hand wheel 51b of the wheel arrangement 53 is at a higher vertical level than the left-hand wheel 51a due to the uneven ground 12a. See dashed contours indicating the positions of the wheels 51. As a result, the third arm 65 is tilted, such that the attachment 67 at the first end portion 65a is lower than the attachment 69 at the second opposite end portion 65b. However, the third attachment 71 has a substantially unchanged vertical position. The transverse distance between the wheels 51a, 51 b is the same.

In order to allow the third arm 65 to change between a straight and a tilted position, its ends 65a, 65b are displaceable in relation to the third attachment 67 and fourth attachment 69. This may, as an example, be achieved by the third arm 65 having an elongated opening 72a, 72b or a slot, combined with an attachment means having a neck with a diameter adapted to the elongated opening 72a, 72b and a head with a larger diameter keeping the attachment in place. See Figure 6.

A further example of uneven ground 12b is illustrated by a continuous line in Figure 6. The right-hand wheel 51b of the wheel arrangement 53 is at a lower vertical level than the left-hand wheel 51a due to the uneven ground 12b.

Figure 7 illustrates a cross-section through the arrangement 1 comprising the frame 11. The frame 11 may be divided along division line D going through the second A-frame, in case only the centre section 9 is to be used. The left-hand outer section 5 and the right-hand outer section 7 are attached to the transverse frame 11e, e.g. by means of bolts B1 and B2. The centre section 9 is attached to the first A-frame 11a by means of a bar 75, or a pair of parallel bars. These are attached to the centre section 9 e.g. by means of a bolt B3. See also Figure 1b.

The cross-section through the right-hand outer section 7 is similar to as for Figure 2a above and will not be described again. At the left of Figure 7 there is a cross-section of the centre section 9. The centre section 9 comprises a front cover 13, a cutting device 19 and a pick-up device 27, similar to the ones explained in conjunction with Figures 2-4. The apparatus of the centre section 9 differs from the left-hand outer section 5 and the right-hand outer section 7 in that there is no transport device 29. Since the centre section already is located in the centre, there is no desire to transport the crop in the transverse direction T and hence the transport device 29 may be omitted. Instead the crop lands on the ground 12 behind pick-up device 27. There is neither any rear guide 31 in the centre section, since there is no transport device 29. There may however be a guide 10a, 10b located between the centre section 9 and one of the outer sections 5, 7, which guide 10a, 10b may move the crop a short distance in the transverse direction T, if it is desired to lay the crop in a string. Preferably, there is one such guide 10a, 10b at either side of the centre section 9. See also Figure 1b.

Figure 7 further illustrates different possible positions for the wheels 51 when running over uneven ground 12, as explained above in conjunction with Figures 5 and 6. The wheels 51 are attached to the carrying beam 73 by means of the wheel arrangement 53 comprising the third attachment 71. The position of the third attachment 71 relative to the carrying beam 73 is adjustable, e.g. by mechanical means or by hydraulic means, not illustrated. By adjusting this relative position, the height of the apparatus above the ground 12 is adjusted, and thereby the cutting height h and the distance between the fingers 41 and the ground 12 is adjusted.

All three apparatuses 5, 7, 9 comprise a cutting device 19 having a cutting position 23 and a non-cutting position 25. The cutting device 19 is pivotably connected to the housing 37 by means of at least one elongate arm 77, preferably a pair of elongate arms 77, one at each lateral side of the apparatus 5, 7, 9. The elongate arm 77 is at a first end portion pivotably connected to the cutting device 19 at a first rotation axis CA1 and at a second opposite end portion pivotably connected to the housing 37 at a second rotation axis CA2, such that the cutting device 19 is displaceable between the cutting position 23 and the non-cutting position 25 by means of rotation around the rotation axes CA1, CA2 at the first and second ends of the elongate arm 77. When the cutting device 19 is in the cutting position, the cutting height h may be adjusted by adjusting the height of the apparatus in relation to the ground 12, e.g. by adjusting the position of the third attachment 71 relative to the carrying beam 73 as described above.

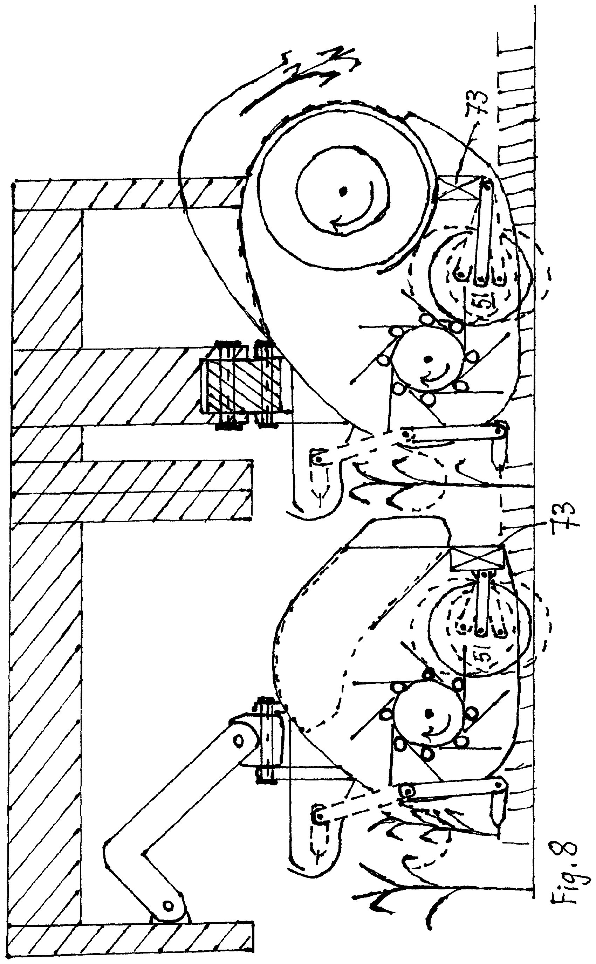

Instead of using the wheel arrangement 53 as described above in conjunction with Figures 5 and 6, the wheels 51 may be pivotally attached to the carrying beam 73, the pivotal arrangement allowing vertical displacement of the wheels 51. See the embodiment of Figure 8. The other details of the embodiment of Figure 8 are similar as for the embodiment of Figure 7 and will not be explained again.

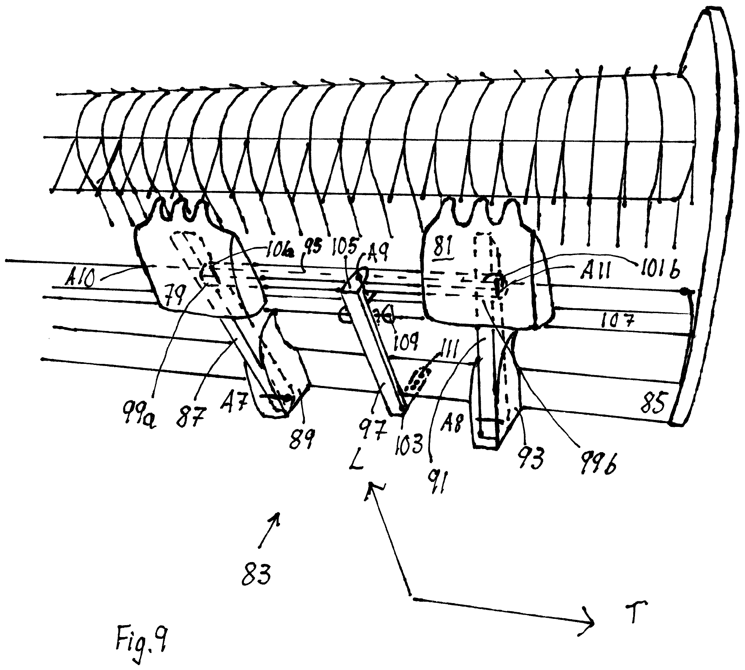

As an alternative to utilizing wheels 51 running over the ground 12, skid shoes 79, 81 may be utilized as illustrated by Figures 9-11. The skid shoes 79, 81 are arranged to slide over the ground 12. Figure 9 shows a perspective view from below. Figure 10 shows a view from behind. Figure 11 shows a side view.

The skid shoes 79, 81 are arranged in pairs, such that a first skid shoe 79 and a second skid shoe 81 are comprised in a skid shoe arrangement 83. It would be possible to use the skid shoes 79, 81 as single units, but the illustrated skid shoe arrangement 83 is advantageous when the apparatus 5, 7, 9 runs over uneven ground 12, since the skid shoe arrangement 83 is able to even out vertical differences of the ground 12. The apparatus 5, 7, 9 may comprise one, two, three, four or more skid shoe arrangements 83. For example, the apparatus may comprise two skid shoe arrangements 83, one adjacent to each lateral side of the apparatus.

The first skid shoe 79 is pivotally connected to a carrying beam 85 by means of a first arm 87 and a first bracket 89 forming a first pivot axis A7 adjacent to a rear end of the first arm 87. The second skid shoe 81 is pivotally connected to the carrying beam 85 by means of a second arm 91 and a second bracket 93 forming a second pivot axis A8 adjacent to a rear end of the second arm 91. The pivot axes A7, A8 are parallel to each other and extend in the transverse direction T. The carrying beam 85 also extends in the transverse direction T parallel to the main plane of the ground 12. The carrying beam 85 is further parallel to the above-mentioned rotor 39 provided with the fingers 41.

The first and second arms 87, 91 are also connected by an arm 95 located at a front portion of the respective arms 87, 91. The arm 95 is pivotally connected to a carrying structure 97 by a pivot axis A9, which is substantially parallel to the longitudinal direction L of the apparatus. The first skid shoe 79 is pivotally connected to the arm 95 at a first pivot axis A10 and the second skid shoe 81 is pivotally connected to the arm 95 at a second pivot axis A11. The pivot axes A10, A11 are parallel to each other and substantially extend in the longitudinal direction L.

An example of uneven ground 12a is illustrated by a dashed line in Figure 10. The first skid shoe 79 of the skid shoe arrangement 83 is at a higher vertical level than the second skid shoe 81 due to the uneven ground 12a. See dashed contours indicating the positions of the skid shoes 79, 81. As a result, the arm 95 is tilted around the pivot axis A9 connecting it to the carrying structure 97.

In order to allow the arm 95 to change between a straight and a tilted position, and different tilted positions, its ends 99a, 99b are displaceable in relation to the pivot axes A10, A11 connecting it to the skid shoes 79, 81. This may, as in the illustrated embodiment, be achieved by the ends 99a, 99b of the arm 95 comprising flexible bushings 101a, 101b, such as rubber bushings, which allow for a transverse displacement of arm 95 in relation to the pivot axes A10, A11 of the skid shoes 79, 81.

A further example of uneven ground 12b is illustrated by a continuous line in Figure 10. The second skid shoe 81 of the skid shoe arrangement 83 is at a lower vertical level than the first skid shoe 79 due to the uneven ground 12b.

As an alternative to using flexible bushings 101a, 101b, the ends 99a, 99b of the arm 95 may comprise a respective elongated opening or slot, combined with that a pivot pin forming the respective pivot axes A10, A11 has a neck with a diameter adapted to the elongated opening and a head with a larger diameter keeping the pivot pin in place, corresponding to what is described above in conjunction with the wheel arrangement. In addition, the above-mentioned wheel arrangement 53 may comprise flexible bushings corresponding to those of the skid shoe arrangement 83 instead of the slots or as a complement to the slots.

The carrying structure 97 is attached to the carrying beam 85 at a rear end 103. See Figure 9. The front end 105 of the carrying structure 97 is attached to the arm 95 at pivot axis A9, and via the arm 95 to the skid shoes 79, 81, as described above. In addition, the carrying structure 97 is attached to a transverse beam 107 via a pivotal attachment 109 at a front portion of the carrying structure 97. The pivotal attachment 109 is however rearward of the front end 105, where the carrying structure 97 is attached to the skid shoes 79, 81. Hence the carrying structure 97 comprises two support points to the rest of the apparatus.

In order to change the height of the apparatus 5, 7, 9 above the ground 12, and thereby the distance between the fingers 21 and the ground 12, the relative position of the carrying structure 97 in relation to the carrying beam 85 may be altered. This may be achieved by the rear end 103 of the carrying structure 97 comprising a plurality of holes 111 and one of the holes 111 may be selected to obtain the desired height over the ground 12. Purely as an example there may be a centre-to-centre distance between the holes 111 of between 1 and 5 cm, preferably between 2 and 3 cm, and the number of holes may be between 2 and 10.

When the relative position of the carrying structure 97 in relation to the carrying beam 85 is altered, e.g. by utilizing another hole of the plurality of holes 111, the carrying structure 97 pivots at the pivotal attachment 109. For example, if lowering the rear end 103 of the carrying structure 97 in relation to the carrying beam 85, the front end 105 will be raised. Thereby the skid shoes 79, 81 will also be raised and the apparatus will be closer to the ground 12, i.e. having a lower working height.

In the illustrated embodiment, the distance from the rear end 103 to the pivotal attachment 109 is about five times longer than the distance from the pivotal attachment 109 to the front end 105, where the skid shoes 79, 81 are attached via the arm 95. Hence a 10 cm change at the rear end 103 would correspond to about a 2 cm change at the front end 105. This is best gleaned from the side view of Figure 11.

The position of the pivotal attachment 109 in relation to the rear end 103 and the front end 105 is selectable, such that a desired relation between height adjustment at the rear end 103 and height adjustment at the front end 105 may be obtained. Further, instead of utilizing the plurality of holes 111, the height adjustment at the rear end 103 may be made in another way known to the skilled person. The height adjustment may e.g. be stepless.

Figure 11 further illustrates how the cutting height may be adjusted. This way may be used as an alternative to, or a complement to, the way described in conjunction with Figure 7. An arm 113 of the cutting device 19 is pivotably connected to a first arm 115 at a pivot axis CA3 and to a second arm 117 at a pivot axis CA4. The first arm 115 has an adjustable length, which is adjustable by means of an adjustment means 119, e.g. a turnbuckle or a piston. A rear end 121, 123 of the respective arms 115, 117 is connected to the housing 37.

The position of the second arm 117 may be changed by a positioning means 125, e.g. a piston, operating at the second arm 117 anywhere along its length between the attachment to the housing 37 at the rear end 123 and the pivot axis CA4 connecting it to the arm 113 of the cutting device 19. The positioning means 125 may be utilized to displace the cutting device 19 between its cutting position 23, as illustrated in Figure 11, and its non-cutting position.

The cutting device 19 further comprises a skid unit 127 allowing the cutting device 19 to skid along the ground 12. The skid unit 127 further allows a selectable distance between the cutting device 19 and the ground 12, in particular between the mover 38 and the ground 12. When changing the length of the first arm 115, while maintaining the position of the second arm 117, the arm 113 of the cutting device 19 will rotate around the pivot axis CA4, while also pivoting at the pivot axis CA3. For example, if making the first arm 115 longer, the lower portion of the cutting device 19 will move rearwards, utilizing a more forward portion of the skid unit 127 and thus come closer to the ground 12, i.e. the cutting height is lowered. Correspondingly, if making the first arm 115 shorter, the lower portion of the cutting device 19 will move forwards, utilizing a more rearward portion of the skid unit 127 and thus come further from the ground 12, i.e. the cutting height is raised.

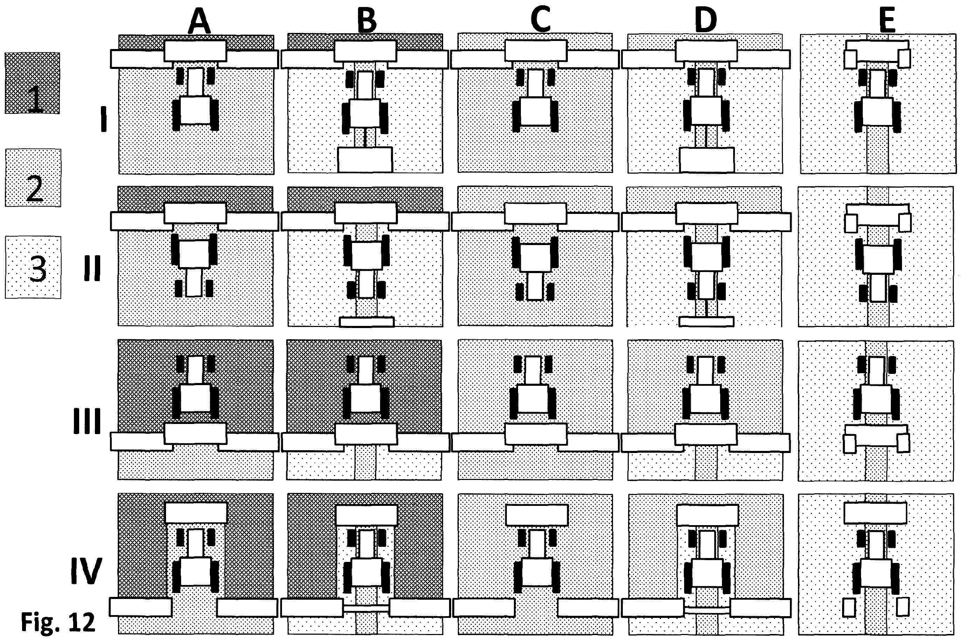

By varying the positions of the front cover 13, the cutting device 19 and the rear guide 31, the apparatus 7 is set up for performing different operations as explained by Table 1. The columns given in Table 1 refer to Figure 12.

**Table 1**

| *Operation* | *Position of front cover* | *Position of cutting device* | *Position of rear guide* |
|---|---|---|---|
| Cutting + spread distribution (Col. A) | Raised | Cutting | Raised |
| Cutting + string-laying (Col. B) | Raised | Cutting | Lowered |
| Turning crop (Col. C) | Lowered | Non-cutting | Raised |
| String-laying (Col. D) | Lowered | Non-cutting | Lowered |
| Aerating string (Col. E) | Lowered | Non-cutting | Lowered or raised |

The arrangement 1 comprising the left-hand outer section 5, the right-hand outer section 7 and the centre section 9 may be connected to the tractor 3 in different ways as illustrated by Figure 12.

Figure 12 illustrates different ways of connecting the arrangement to the tractor 3. The running direction of the tractor is upwards in Figure 12. As mentioned above, the apparatus 5 of the left-hand outer section and the apparatus 7 of the right-hand outer section 7 comprise a cutting device 19, a pick-up device 27 and a transport device 29, while the apparatus 9 of the centre section comprises a cutting device 19 and a pick-up device 27. The apparatuses 5, 7, 9 of all three sections may be connected in front of the tractor 3 moving forwards, see top line I of Figure 12. The apparatuses 5, 7, 9 of all three sections may all be connected behind the tractor 3 moving backwards, i.e. opposite to the normal running direction of the tractor 3, see second line II of Figure 12. The apparatuses 5, 7, 9 of all three sections may all be connected behind the tractor 3 moving forwards, see third line III of Figure 12. The apparatus 9 of the centre section may be connected in front of the tractor 3 and the apparatuses 5, 7 of the left-hand outer section and the right-hand outer section behind the tractor 3, which moves forwards, see fourth line IV of Figure 12.

The area denoted by 1 in Figure 12, chequered, illustrates growing crop or grass. The area denoted by 2, dense dots, illustrates cut crop or grass lying on the ground. The area denoted by 3, sparse dots, illustrates naked ground.

The first column A of Figure 12 illustrates cutting a crop and laying the cut crop in spread distribution. The second column B of Figure 12 illustrates cutting a crop and laying the cut crop in a string. The third column C of Figure 12 illustrates turning a crop. The crop is laid in spread distribution. The fourth column D of Figure 12 illustrates string-laying. The fifth column E of Figure 12 illustrates aerating of a string. In the illustrated embodiment of column E, only the apparatus 9 of the centre section is used for aerating the string. Below the operations will be described with reference also to Figures 2, 3 and 8.

Column A: During cutting of the crop, e.g. haymaking, the front cover 13 is in its raised position 15. The cutting device 19 is in its cutting position 23 and cuts the crop 21, e.g. grass. The pick-up device 27 picks up the cut crop by means of the pick-up elements, here the fingers 41. The fingers 41 move the crop rearwards. The rear guide 31 is in its raised position 33, such that the crop lands on the ground 12 behind the right-hand outer section 7 in a spread distribution, i.e. distributed over the width w of the right-hand outer section 7 in the transverse direction T, preferably distributed over the whole width w of the right-hand outer section 7, most preferably substantially evenly distributed over the whole width w of the right-hand outer section 7. Similarly, the crop lands on the ground 12 behind the left-hand outer section 5 and the centre section 9 in a spread distribution. It is possible to only use a low effect for performing the operation. The spread distribution facilitates the drying of the crop.

Column C: For turning of a crop, e.g. a crop having been cut earlier and now lying on the ground in order to dry, the cutting device 19 is moved out of the way to its non-cutting position 25 and the front cover 13 is in its lowered position 17. The pick-up device 27 picks up the cut crop by means of the pick-up elements, in the illustrated embodiment the fingers 41. The fingers 41 move the crop rearwards. The rear guide 31 is in its raised position 33, such that the crop lands on the ground 12 behind the right-hand outer section 7 in a spread distribution. Similarly, the crop lands on the ground 12 behind the left-hand outer section 5 and the centre section 9 in a spread distribution.

Column D: For string-laying of a crop, e.g. a crop having been cut earlier and now lying on the ground in order to dry, the cutting device 19 is out of the way in its non-cutting position 25 and the front cover 13 is in its lowered position 17. The pick-up device 27 picks up the cut crop by means of the pick-up elements, in the illustrated embodiment the fingers 41. The fingers 41 move the crop rearwards. The rear guide 31 is in its lowered position 35, such that the crop is transferred from the pick-up device 27 to the transport device 29. The transport device 29 moves the crop in the transverse direction T, as explained above, such that the crop can be collected in a string. String-laying with the apparatus according to the invention is advantageous over prior art apparatuses since the cut crop/grass is not pulled along the ground. Instead, the crop is transported within the apparatus above the ground.

Column B: String-laying may also be performed in in conjunction with cutting of a crop. In that case the cutting device 19 cuts the crop 21, e.g. grass. The pick-up device 27 picks up the cut crop by means of the pick-up elements, in the illustrated embodiment the fingers 41. The fingers 41 move the crop rearwards. The rear guide 31 is in its lowered position 35, such that the crop is transferred from the pick-up device 27 to the transport device 29. The transport device 29 moves the crop in the transverse direction T, as explained above, such that the crop can be collected in a string. See the second column B of Figure 12.

Column E: Aerating of a string of the crop may be performed by any of the sections, 5, 7, 9, but preferably the centre section 9 is used. The crop lies on the ground 12 in a string. The cutting device 19 is out of the way to its non-cutting position 25 and the front cover 13 is in its lowered position 17. The pick-up device 27 picks up the crop by means of the pick-up elements, in the illustrated embodiment the fingers 41. The fingers 41 move the crop rearwards. The rear guide 31 may be in its raised position 33 or in its lowered position 35.

The apparatuses 5, 7, 9 and the arrangement 1 are suitable for trimming of pastureland, in particular natural pastureland, i.e. non-cultivated pastureland. It is then advantageous that the apparatus 5, 7, 9 is able to cut the plants, i.e. it does not tear them off. Further, since the apparatus can also rake the cut plants together, the operation is possible to perform in one run. See the second column B of Figure 12.

Due to the versatility of the apparatuses 5, 7, 9 and thus the arrangement 1, one and the same apparatus 5, 7, 9, and arrangement 1, can be used for many different field operations. Further, since the same apparatus is used, it will automatically have the same width w and thereby the arrangement 1 has the same width. The arrangement is adapted for controlled traffic farming, CTF, i.e. it is possible to select location of the wheel tracks in a controlled way, e.g. by means of GPS. For example, it is possible to run in the same wheel tracks every time the field is run over. Thereby the above-mentioned problem of ground compaction is limited to those wheel tracks, leaving the rest of the field unaffected. Further, by always using the same width, mechanical damages to the plants are minimized. The amount of crop for a field will be larger as compared to using known machines. Since less ground is compacted, there will be a decreased need for ground treatment. As another example, it is instead possible to always selecting a new wheel track each time the field is run over, such that the wheels tracks are evenly distributed over the field.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An apparatus (5, 7, 9) for treating a crop (21), said apparatus (5, 7, 9) having a longitudinal (L) and a transverse direction (T) and comprising
- a cutting device (19), adapted to cut said crop (21),
- a pick-up device (27), adapted to pick-up said crop (21) and to move it substantially rearwards in said longitudinal direction (L),
said cutting device (19) being vertically displaceable in relation to said pick-up device (27), between a cutting position (23) and a non-cutting position (25), **characterized in that**
said pick-up device (27) is adapted to pick-up said crop (21) from said cutting device (19), if cutting the crop at the same time, and from ground (12), if picking up already cut crop.

2. The apparatus (5, 7) according to claim 1, wherein said apparatus further comprises
- a transport device (29), adapted to move said crop (21) in said transverse direction (T),
said pick-up device (27) further being adapted to hand said crop (21) over to said transport device (29).

3. The apparatus (5, 7) according to claim 2, wherein said apparatus (5, 7) further comprises
- a rear guide (31), having a raised (33) and a lowered position (35),
at least a portion of said rear guide (31) being located above and/or longitudinally behind said transport device (29).

4. The apparatus (5, 7, 9) according to any one of the preceding claims, wherein said apparatus (5, 7, 9) further comprises
- a front cover (13), having at least a raised (15) and a lowered position (17), said front cover (13) being located longitudinally in front of said pick-up device (27).

5. The apparatus (5, 7) according to any one of claims 2-4, wherein said pick-up device (27) and said transport device (29) are comprised in one unit, such that said crop (21) is handed over directly from said pick-up device (27) to said transport device (29).

6. The apparatus (5, 7, 9) according to any one of the preceding claims further comprising
- a housing (37), enclosing at least said pick-up device (27), and
- at least one elongate arm (77), preferably at least one elongate arm (77) at each lateral side of the housing (37),
wherein said cutting device (19) is pivotably connected to said housing (37) by means of said at least one elongate arm (77), said elongate arm (77) at a first end portion being pivotably connected to said cutting device (19) at a first rotation axis (CA1) and at a second end portion being pivotably connected to said housing (37) at a second rotation axis (CA2), such that said cutting device (19) is displaceable between said cutting position (23) and said non-cutting position (25) by means of rotation around said rotation axes (CA1, CA2) at said first and second end portions of said elongate arm (77).

7. The apparatus (5, 7, 9) according to any one of the preceding claims, wherein said pick-up device (27) comprises a rotor (39) provided with a plurality of pick-up elements (41), such as fingers, said pick-up elements (41) being arranged to pick-up said crop (21) and said rotor (39) having a length axis being in the transverse direction (T) of the apparatus (5, 7, 9).

8. The apparatus (5, 7, 9) according to any one of the preceding claims further comprising a wheel arrangement (53) comprising a pair of wheels (51a, 51b) with a common attachment (71) for pivotal attachment to a carrying beam (73) of the apparatus (5, 7, 9), rotation axes (A2, A3) of said wheels (51) being parallel to each other, said rotation axes (A2, A3) of said wheels (51) being vertically displaceable in relation to each other.

9. The apparatus (5, 7, 9) according to claim 8, wherein said wheel arrangement (53) comprises
- a portion (55a) of a transverse axle (55),
- a first arm (57), extending in the longitudinal (L) direction of the apparatus (5, 7, 9), said first arm (57) being pivotally connected to said portion (55a) of said transverse axle (55) at a first end portion (57a) of said first arm (57),
- a second arm (59), extending in the longitudinal (L) direction of the apparatus (5, 7, 9), said second arm (59) being pivotally connected to said portion (55a) of said transverse axle (55) at a first end portion (59a) of said second arm (59), and
- a third arm (65), at a first end portion (65a) being pivotally connected to a second end portion (57b) of said first arm (57), and at a second end portion (65b) being pivotally connected to a second end portion (59b) of said second arm (59),
said portion (55a) of said transverse axle (55), said first arm (57), said second arm (59) and said third arm (65) forming a frame,
a first wheel (51a) of said pair of wheels (51) being rotatably connected to said first arm (57) at a first attachment (61),
a second wheel (51b) of said pair of wheels (51) being rotatably connected to said second arm (59) at a second attachment (63),
said third arm (65) being pivotally attachable to said carrying beam (73) at a third attachment (71).

10. The apparatus (5, 7, 9) according to any one of the preceding claims further comprising a skid shoe arrangement (83) comprising a pair of skid shoes (79, 81) and an arm (95), said skid shoes (79, 81) being pivotally attached to said arm (95), said skid shoes (79, 81) being vertically displaceable in relation to each other by tilting said arm (95) around a pivot axis (A9).

11. The apparatus (5, 7, 9) according to claim 10, wherein said skid shoe arrangement (83) further comprises a carrying structure (97), said arm (95) being pivotally attached to said carrying structure (97) at said pivot axis (A9) to allow said tilting, said carrying structure (97) being attached to a carrying beam (85) of the apparatus (5, 7, 9), preferably said carrying structure (97) being attached to said carrying beam (85) in a way allowing height adjustment.

12. An arrangement (1) comprising,
- a first apparatus (5) according to any one of claims 1-11 being used as a left-hand outer section of said arrangement (1),
- a second apparatus (7) according to any one of claims 1-11 being used as a right-hand outer section of said arrangement (1),
- a third apparatus (9) according to any one of claims 1-11 being used as a centre section of said arrangement (1),
said arrangement (1) being adapted such that said third apparatus (9) may be arranged between said first (5) and second apparatus (7) or may be used separate from said left-hand and right-hand outer sections.

13. A use of the apparatus (5, 7, 9) according to any one of claims 1-11, or the arrangement (1) according to claim 12, for operations of cutting a crop (21), turning a crop (21), string-laying a crop (21) and/or aerating a string of a crop (21), wherein said apparatus (5, 7, 9), or said arrangement (1), is adapted to perform at least three, most preferably all four of said operations.

14. The use according to claim 13, wherein an operation width (w) of said apparatus (5, 7, 9) or arrangement (1) is the same for at least two, preferably at least three and most preferably all four of said operations.

15. A method of treating a crop utilizing an apparatus according to any one of claims 1-11 or an arrangement according to claim 12, wherein said apparatus (5, 7) comprises
- said front cover (13), having at least a raised (15) and a lowered position (17), said front cover (13) being located longitudinally in front of said pick-up device (27),
- said transport device (29), adapted to move said crop (21) in said transverse direction (T), said pick-up device (27) being adapted to hand said crop (21) over to said transport device (29), and
- said rear guide (31), having a raised (33) and a lowered position (35),
at least a portion of said rear guide (31) being located above and/or longitudinally behind said transport device (29),
said method comprising
- setting said cutting device (19) in its cutting position (23) or its non-cutting position (25),
- setting said front cover (13) in its lowered position (17) or in its raised position (15),
- setting said rear guide (31) in its lowered position (35) or in its raised position (33).

## Patentansprüche

1. Vorrichtung (5, 7, 9) zur Behandlung von Erntegut (21), wobei die Vorrichtung (5, 7, 9) eine Längsrichtung (L) und eine Querrichtung (T) aufweist und umfasst:
- eine zum Abschneiden des Ernteguts (21) eingerichtete Schneidvorrichtung (19),
- eine Aufnahmevorrichtung (27), die dazu eingerichtet ist, das Erntegut (21) aufzunehmen und es in der Längsrichtung (L) im Wesentlichen nach hinten zu bewegen,
wobei die Schneidvorrichtung (19) in Bezug auf die Aufnahmevorrichtung (27) zwischen einer Schneidposition (23) und einer Nicht-Schneidposition (25) vertikal verlagerbar ist,
**dadurch gekennzeichnet, dass**
die Aufnahmevorrichtung (27) dazu eingerichtet ist, das Erntegut (21) von der Schneidvorrichtung (19) aufzunehmen, falls das Erntegut zur selben Zeit abgeschnitten wird, und vom Boden (12), wenn bereits abgeschnittenes Erntegut aufgenommen wird.

2. Vorrichtung (5, 7) nach Anspruch 1, wobei die Vorrichtung weiter umfasst:
- eine Transportvorrichtung (29), die zum Bewegen des Ernteguts (21) in der Querrichtung (T) eingerichtet ist,
wobei die Aufnahmevorrichtung (27) weiter dazu eingerichtet ist, das Erntegut (21) der Transportvorrichtung (29) zu übergeben.

3. Vorrichtung (5, 7) nach Anspruch 2, wobei die Vorrichtung (5, 7) weiter umfasst:
- eine hintere Führung (31), die eine angehobene (33) und eine abgesenkte Position (35) aufweist,
wobei mindestens ein Teil der hinteren Führung (31) sich über und/oder in Längsrichtung hinter der Transportvorrichtung (29) befindet.

4. Vorrichtung (5, 7, 9) nach einem der vorhergehenden Ansprüche, wobei die Vorrichtung (5, 7, 9) weiter umfasst:
- eine Frontabdeckung (13), die mindestens eine angehobene (15) und eine abgesenkte Position (17) aufweist, wobei die Frontabdeckung (13) sich in Längsrichtung vor der Aufnahmevorrichtung (27) befindet.

5. Vorrichtung (5,7) nach einem der Ansprüche 2-4, wobei die Aufnahmevorrichtung (27) und die Transportvorrichtung (29) in einer Einheit enthalten sind, sodass das Erntegut (21) von der Aufnahmevorrichtung (27) direkt der Transportvorrichtung (29) übergeben wird.

6. Vorrichtung (5, 7, 9) nach einem der vorhergehenden Ansprüche, weiter umfassend:
- ein Gehäuse (37), das mindestens die Aufnahmevorrichtung (27) umgibt, und
- mindestens einen länglichen Arm (77), bevorzugt mindestens einen länglichen Arm (77) an jeder lateralen Seite des Gehäuses (37),
wobei die Schneidvorrichtung (19) mittels des mindestens einen länglichen Arms (77) schwenkbar mit dem Gehäuse (37) verbunden ist, wobei der längliche Arm (77) an einem ersten Endteil an einer ersten Rotationsachse (CA1) schwenkbar mit der Schneidvorrichtung (19) verbunden ist und an einem zweiten Endteil an einer zweiten Rotationsachse (CA2) schwenkbar mit dem Gehäuse (37) verbunden ist, sodass die Schneidvorrichtung (19), mittels Rotation um die Rotationsachsen (CA1, CA2) an dem ersten und dem zweiten Endteil des länglichen Arms (77), zwischen der Schneidposition (23) und der Nicht-Schneidposition (25) verlagerbar ist.

7. Vorrichtung (5, 7, 9) nach einem der vorhergehenden Ansprüche,
wobei die Aufnahmevorrichtung (27) einen Rotor (39) umfasst, der mit einer Vielzahl von Aufnahmeelementen (41), wie etwa Fingern, versehen ist, wobei die Aufnahmeelemente (41) zum Aufnehmen des Erntegute (21) eingerichtet sind und der Rotor (39) eine Längsachse aufweist, die in der Querrichtung (T) der Vorrichtung (5, 7, 9) verläuft.

8. Vorrichtung (5, 7, 9) nach einem der vorhergehenden Ansprüche,
weiter eine Radanordnung (53) umfassend, welche ein Paar Räder (51a, 51b) mit einer gemeinsamen Befestigung (71) zur Schwenkbefestigung an einem Stützbalken (73) der Vorrichtung (5, 7, 9) umfasst, wobei Rotationsachsen (A2, A3) der Räder (51) parallel zueinander verlaufen, wobei die Rotationsachsen (A2, A3) der Räder (51) in Bezug zueinander vertikal verlagerbar sind.

9. Vorrichtung (5, 7, 9) nach Anspruch 8, wobei die Radanordnung (53) umfasst:
- einen Teil (55a) einer Querachse (55),
- einen ersten Arm (57), der sich in der Längsrichtung (L) der Vorrichtung (5, 7, 9) erstreckt, wobei der erste Arm (57) an einem ersten Endteil (57a) des ersten Arms (57) schwenkbar mit dem Teil (55a) der Querachse (55) verbunden ist,
- einen zweiten Arm (59), der sich in der Längsrichtung (L) der Vorrichtung (5, 7, 9) erstreckt, wobei der zweite Arm (59) an einem ersten Endteil (59a) des zweiten Arms (59) schwenkbar mit dem Teil (55a) der Querachse (55) verbunden ist, und
- einen dritten Arm (65), der an einem ersten Endteil (65a) schwenkbar mit einem zweiten Endteil (57b) des ersten Arms (57) verbunden ist und an einem zweiten Endteil (65b) schwenkbar mit einem zweiten Endteil (59b) des zweiten Arms (59) verbunden ist,
wobei der Teil (55a) der Querachse (55), der erste Arm (57), der zweite Arm (59) und der dritte Arm (65) einen Rahmen bilden,
wobei ein erstes Rad (51a) des Paars von Rädern (51) an einer ersten Befestigung (61) rotierbar mit dem ersten Arm (57) verbunden ist,
wobei ein zweites Rad (51b) des Paars von Rädern (51) an einer zweiten Befestigung (63) rotierbar mit dem zweiten Arm (59) verbunden ist,
wobei der dritte Arm (65) an einer dritten Befestigung (71) schwenkbar an dem Stützbalken (73) befestigbar ist.

10. Vorrichtung (5, 7, 9) nach einem der vorhergehenden Ansprüche,
weiter eine Gleitschuhanordnung (83) umfassend, welche ein Paar Gleitschuhe (79, 81) und einen Arm (95) umfasst, wobei die Gleitschuhe (79, 81) schwenkbar an dem Arm (95) angebracht sind, wobei die Gleitschuhe (79, 81) durch Kippen des Arms (95) um eine Schwenkachse (A9) in Bezug zueinander vertikal verlagerbar sind.

11. Vorrichtung (5, 7, 9) nach Anspruch 10, wobei die Gleitschuhanordnung (83) weiter eine Tragstruktur (97) umfasst, wobei der Arm (95) schwenkbar an der Tragstruktur (97) an der Schwenkachse (A9) befestigt ist, um das Kippen zuzulassen, wobei die Tragstruktur (97) an einem Stützbalken (85) der Vorrichtung (5, 7, 9) angebracht ist, wobei die Tragstruktur (97) bevorzugt auf eine Weise, die Höhenverstellung zulässt, an dem Stützbalken (85) befestigt ist.

12. Anordnung (1), umfassend:
- eine erste Vorrichtung (5) nach einem der Ansprüche 1-11, die als linker äußerer Abschnitt der Anordnung (1) verwendet wird,
- eine zweite Vorrichtung (7) nach einem der Ansprüche 1-11, die als rechter äußerer Abschnitt der Anordnung (1) verwendet wird,
- eine dritte Vorrichtung (9) nach einem der Ansprüche 1-11, die als mittlerer Abschnitt der Anordnung (1) verwendet wird,
wobei die Anordnung (1) so eingerichtet ist, dass die dritte Vorrichtung (9) zwischen der ersten (5) und der zweiten Vorrichtung (7) angeordnet werden kann oder getrennt von der ersten und der zweiten äußeren Vorrichtung verwendet werden kann.

13. Verwendung der Vorrichtung (5, 7, 9) nach einem der Ansprüche 1-11, oder der Anordnung (1) nach Anspruch 12, für die Arbeitsgänge des Abschneidens von Erntegut (21), Wendens von Erntegut (21), in Reihen Legens von Erntegut (21) und/oder Belüftens einer Reihe eines Ernteguts (21), wobei die Vorrichtung (5, 7, 9), oder die Anordnung (1), zur Durchführung von mindestens drei, höchstbevorzugt allen vier dieser Arbeitsgänge eingerichtet ist.

14. Verwendung nach Anspruch 13, wobei eine Arbeitsbreite (w) der Vorrichtung (5, 7, 9) oder Anordnung (1) für mindestens zwei, bevorzugt mindestens drei und höchstbevorzugt alle vier dieser Arbeitsgänge dieselbe ist.

15. Verfahren zur Behandlung von Erntegut unter Anwendung einer Vorrichtung nach einem der Ansprüche 1-11 oder einer Anordnung nach Anspruch 12, wobei die Vorrichtung (5, 7) umfasst:
- die Frontabdeckung (13), welche mindestens eine angehobene (15) und eine abgesenkte Position (17) aufweist, wobei die Frontabdeckung (13) sich in Längsrichtung vor der Aufnahmevorrichtung (27) befindet,
- die Transportvorrichtung (29), die zum Bewegen des Ernteguts (21) in der Querrichtung (T) eingerichtet ist, wobei die Aufnahmevorrichtung (27) zur Übergabe des Ernteguts (21) zu der Transportvorrichtung (29) eingerichtet ist, und
- die hintere Führung (31), welche eine angehobene (33) und eine abgesenkte Position (35) aufweist, wobei mindestens ein Teil der hinteren Führung (31) sich über und/oder in Längsrichtung hinter der Transportvorrichtung (29) befindet,
wobei das Verfahren umfasst:
- Einstellen der Schneidvorrichtung (19) in ihre Schneidposition (23) oder ihre Nicht-Schneidposition (25),
- Einstellen der Frontabdeckung (13) in ihre abgesenkte Position (17) oder in ihre angehobene Position (15),
- Einstellen der hinteren Führung (31) in ihre abgesenkte Position (35) oder in ihre angehobene Position (33).

## Revendications

1. Appareil (5, 7, 9) pour traiter une récolte (21), ledit appareil (5, 7, 9) ayant une direction longitudinale (L) et une direction transversale (T) et comprenant :
- un dispositif de coupe (19), adapté à couper ladite récolte (21),
- un dispositif de ramassage (27), adapté à ramasser ladite récolte (21) et à la déplacer sensiblement vers l'arrière dans ladite direction longitudinale (L),
ledit dispositif de coupe (19) étant déplaçable verticalement par rapport audit dispositif de ramassage (27), entre une position coupante (23) et une position non-coupante (25),
**caractérisé en ce que**
ledit dispositif de ramassage (27) est adapté à ramasser ladite récolte (21) à partir dudit dispositif de coupe (19), en coupant la récolte en même temps, et à partir du sol (12), en ramassant une récolte déjà coupée.

2. Appareil (5, 7) selon la revendication 1, dans lequel ledit appareil comprend en outre :
- un dispositif de transport (29), adapté à déplacer ladite récolte (21) dans ladite direction transversale (T),
ledit dispositif de ramassage (27) étant en outre adapté à transférer ladite récolte (21) audit dispositif de transport (29).

3. Appareil (5, 7) selon la revendication 2, dans lequel ledit appareil (5, 7) comprend en outre :
- un guide arrière (31), ayant une position relevée (33) et une position abaissée (35), au moins une partie dudit guide arrière (31) étant située au-dessus et/ou longitudinalement derrière ledit dispositif de transport (29).

4. Appareil (5, 7, 9) selon l'une quelconque des revendications précédentes, dans lequel ledit appareil (5, 7, 9) comprend en outre :
- un capot avant (13), ayant au moins une position relevée (15) et une position abaissée (17), ledit capot avant (13) étant situé longitudinalement devant ledit dispositif de ramassage (27).

5. Appareil (5, 7) selon l'une quelconque des revendications 2 à 4, dans lequel ledit dispositif de ramassage (27) et ledit dispositif de transport (29) sont compris dans une unité, de sorte que ladite récolte (21) est transférée directement depuis ledit dispositif de ramassage (27) vers ledit dispositif de transport (29).

6. Appareil (5, 7, 9) selon l'une quelconque des revendications précédentes, comprenant en outre :
- un carter (37), renfermant au moins ledit dispositif de ramassage (27), et
- au moins un bras allongé (77), de préférence au moins un bras allongé (77) de chaque côté latéral du carter (37),
dans lequel ledit dispositif de coupe (19) est relié de manière pivotante audit carter (37) au moyen d'au moins un bras allongé (77), ledit bras allongé (77) au niveau d'une première partie d'extrémité étant relié de manière pivotante audit dispositif de coupe (19) via un premier axe de rotation (CA1), et au niveau d'une seconde partie d'extrémité étant relié de manière pivotante audit carter (37) via un second axe de rotation (CA2), de sorte que ledit dispositif de coupe (19) est déplaçable entre ladite position coupante (23) et ladite position non-coupante (25) par rotation autour desdits axes de rotation (CA1, CA2) au niveau desdites première et seconde parties d'extrémité dudit bras allongé (77).

7. Appareil (5, 7, 9) selon l'une quelconque des revendications précédentes, dans lequel ledit dispositif de ramassage (27) comprend un rotor (39) muni d'une pluralité d'éléments de ramassage (41), tels que des doigts, lesdits éléments de ramassage (41) étant agencés pour ramasser ladite récolte (21) et ledit rotor (39) ayant un axe longitudinal se situant dans la direction transversale (T) de l'appareil (5, 7, 9).

8. Appareil (5, 7, 9) selon l'une quelconque des revendications précédentes, comprenant en outre un agencement de roues (53) comprenant une paire de roues (51a, 51b) avec une attache commune (71) pour une fixation pivotante à une poutre de support (73) de l'appareil (5, 7, 9), des axes de rotation (A2, A3) desdites roues (51) étant parallèles l'un à l'autre, lesdits axes de rotation (A2, A3) desdites roues (51) étant verticalement déplaçables l'un par rapport à l'autre.

9. Appareil (5, 7, 9) selon la revendication 8, dans lequel ledit agencement de roue (53) comprend :
- une partie (55a) d'un axe transversal (55),
- un premier bras (57), s'étendant dans la direction longitudinale (L) de l'appareil (5, 7, 9), ledit premier bras (57) étant relié de manière pivotante à ladite partie (55a) dudit axe transversal (55) au niveau d'une première partie d'extrémité (57a) dudit premier bras (57),
- un deuxième bras (59), s'étendant dans la direction longitudinale (L) de l'appareil (5, 7, 9), ledit deuxième bras (59) étant relié de manière pivotante à ladite partie (55a) dudit axe transversal (55) au niveau d'une première partie d'extrémité (59a) dudit deuxième bras (59), et
- un troisième bras (65), au niveau d'une première partie d'extrémité (65a) qui est relié de manière pivotante à une seconde partie d'extrémité (57b) dudit premier bras (57), et au niveau d'une seconde partie d'extrémité (65b) qui est relié de manière pivotante à une seconde partie d'extrémité (59b) dudit deuxième bras (59), ladite partie (55a) dudit axe transversal (55), ledit premier bras (57), ledit deuxième bras (59) et ledit troisième bras (65) formant un châssis,
une première roue (51a) de ladite paire de roues (51) étant reliée de manière rotative audit premier bras (57) au niveau d'une première fixation (61),
une seconde roue (51b) de ladite paire de roues (51) étant reliée de manière rotative audit deuxième bras (59) au niveau d'une seconde fixation (63),
ledit troisième bras (65) pouvant être fixé de manière pivotante à ladite poutre de support (73) au niveau d'une troisième fixation (71).

10. Appareil (5, 7, 9) selon l'une quelconque des revendications précédentes, comprenant en outre un agencement de patins de glissement (83) comprenant une paire de patins de glissement (79, 81) et un bras (95), lesdits patins de glissement (79, 81) étant fixés de manière pivotante audit bras (95), lesdits patins de glissement (79, 81) étant déplaçables verticalement l'un par rapport à l'autre en inclinant ledit bras (95) autour d'un axe de pivotement (A9).

11. Appareil (5, 7, 9) selon la revendication 10, dans lequel ledit agencement de patins de glissement (83), comprend en outre une structure de support (97), ledit bras (95) étant fixé de manière pivotante à ladite structure de support (97) au niveau dudit axe de pivotement (A9) pour permettre ledit basculement, ladite structure de support (97) étant fixée à une poutre de support (85) de l'appareil (5, 7, 9), de préférence ladite structure de support (97) étant attachée à ladite poutre de support (85) d'une manière permettant un réglage en hauteur.

12. Arrangement (1) comprenant :
- un premier appareil (5) selon l'une quelconque des revendications 1 à 11, servant de partie extérieure gauche dudit arrangement (1),
- un deuxième appareil (7) selon l'une quelconque des revendications 1 à 11, servant de partie extérieure droite dudit arrangement (1),
- un troisième appareil (9) selon l'une quelconque des revendications 1 à 11 servant de partie centrale dudit arrangement (1),
ledit arrangement (1) étant adapté de sorte que ledit troisième appareil (9) puisse être agencé entre ledit premier (5) et deuxième appareil (7) ou puisse être utilisé séparément desdites parties extérieures gauche et droite.

13. Utilisation de l'appareil (5, 7, 9) selon l'une quelconque des revendications 1 à 11 ou de l'arrangement (1) selon la revendication 12 pour des opérations de coupe d'une récolte (21), de retournement d'une récolte (21), de réalisation d'andains (21) et/ou d'aération d'andains (21), dans lequel ledit appareil (5, 7, 9) ou ledit arrangement (1) est adapté à effectuer au moins trois, de manière préférée toutes les quatre desdites opérations.

14. Utilisation selon la revendication 13, dans laquelle une largeur de fonctionnement (w) dudit appareil (5, 7, 9) ou de l'arrangement (1) est identique pour au moins deux, de préférence pour au moins trois et de préférence encore pour toutes les quatre desdites opérations .

15. Procédé de traitement d'une récolte utilisant un appareil selon l'une quelconque des revendications 1 à 11 ou un arrangement selon la revendication 12, dans lequel ledit appareil (5,7) comprend :
- ledit capot avant (13), ayant au moins une position relevée (15) et une position abaissée (17), ledit capot avant (13) étant situé longitudinalement devant ledit dispositif de ramassage (27),
- ledit dispositif de transport (29), adapté à déplacer ladite récolte (21) dans ladite direction transversale (T), ledit dispositif de ramassage (27) étant adapté à transférer ladite récolte (21) sur ledit dispositif de transport (29), et
- ledit guide arrière (31), ayant une position relevée (33) et une position abaissée (35),
au moins une partie dudit guide arrière (31) étant située au-dessus et/ou longitudinalement derrière ledit dispositif de transport (29),
ledit procédé comprenant :
- le réglage dudit dispositif de coupe (19) dans sa position coupante (23) ou dans sa position non-coupante (25),
- la fixation dudit capot avant (13) dans sa position abaissée (17) ou dans sa position relevée (15),
- le réglage dudit guide arrière (31) dans sa position abaissée (35) ou dans sa position relevée (33).
